# EUROPEAN PATENT APPLICATION

(11) **EP 4 733 027 A1**
(43) Date of publication of application: **29.04.2026**
(21) Application number: 24825537.4
(22) Date of filing: 02.04.2024
(51) Int. Cl.: B29C 33/32, B23Q 3/15, B25B 11/00, B29C 45/64

(54) **MAGNETIC CLAMP DEVICE**

(30) Priority: 22.06.2023 JP 2023102211
(71) Applicant: Kosmek Ltd., Kobe-shi, Hyogo 651-2241 (JP)
(72) Inventor: KOJIMA, Ryota, Kobe City, Hyogo 651-2241 (JP)
(74) Representative: Kramer Barske Schmidtchen Patentanwälte PartG mbB
(86) International application number: PCT/JP2024/013568
(87) International publication number: WO 2024/262127

(57) **Abstract**

A review is conducted on the contact area between a mold and a magnetic pole, aiming to optimize the contact area between the magnetic pole and the mold.

A magnetic clamp device 1 comprises a plate body 2 and a magnetic pad 3 disposed in a housing chamber 2a. The magnetic pad 3 includes: a magnetic pole 6 having a pad surface PS; a polarity-reversible magnet 8 provided between the magnetic pole 6 and the bottom portion 2b of the housing chamber 2a; and a non-reversible magnet 7 surrounding the magnetic pole 6 and provided between the magnetic pole 6 and the inner peripheral side surface 2e of the housing chamber 2a. An adjustment recess 5 is formed on the pad surface PS to adjust the area of the pad surface PS, thereby matching the magnetic pole area M of the non-reversible magnet 7 with the pad surface area A.

## Description

### [TECHNICAL FIELD]

The present invention relates to a magnetic clamp device.

### [BACKGROUND ART]

A magnetic clamp device for an injection molding machine is known, which utilizes magnetic attraction to fix a target object, such as a mold. The magnetic clamp device is a device that magnetically secures the mold to a plate body made of magnetic material, which is mounted on a platen of an injection molding machine. The plate body is provided with a plurality of magnetic pads. Each of the magnetic pads includes a non-reversible magnet (e.g., neodymium magnet) whose polarity cannot be reversed arranged around a magnetic pole, and a reversible magnet (e.g., an alnico magnet) whose polarity can be reversed arranged on the back side of the magnetic pole. By controlling the magnetic polarity of the alnico magnet with a coil, it is possible to switch between a magnetic circuit that is closed within the plate body and a magnetic circuit that passes through the mold.

For example, according to Patent Document 1, the magnetic clamp device has a plate body made of magnetic material and magnetic pads. Each of the magnetic pads is cylindrical and is disposed in a bottomed housing chamber drilled on the front side of the plate body. The magnetic clamp device has a magnetic pole, a non-reversible magnet disposed around the magnetic pole, a reversible magnet disposed on the back side of the magnetic pole, and a coil disposed around the reversible magnet. A through hole is drilled in the center of the magnetic pole, into which a bolt is inserted. This through hole is provided with a counterbore hole that hides the head of the bolt. The magnetic pad is fixed by inserting the bolt into the through hole and screwing it into a female screw hole provided at the bottom of the hollow portion.

### [RELATED ART DOCUMENTS]

### [PATENT DOCUMENT]

Patent Document 1: Japanese Patent No. 5301117

### [DISCLOSURE OF THE INVENTION]

### [PROBLEMS TO BE SOLVED BY THE INVENTION]

As disclosed in Patent Document 1, the magnetic pole of the magnetic pad is configured to transmit the magnetic flux of a non-reversible magnet to the mold without leakage, thereby enabling secure adsorption of the mold. Accordingly, the contact area between the magnetic pole and the mold is set to be large. A through-hole having a deep counterbore is formed at the center of the magnetic pole. Although this configuration reduces the contact area with the mold, the diameter of the counterbore is made as close as possible to the diameter of the bolt head. This is intended to prevent the accumulation of contaminants such as iron powder and oil. At present, the contact area between the mold and the magnetic pole is designed to be large, and no further consideration has been given to its optimization.

An object of the present invention is to review the contact area between the mold and the magnetic pole, and to optimize the contact area between the magnetic pole and the mold.

### [MEANS TO SOLVE THE PROBLEM]

The present invention relates to a magnetic clamp device comprising a plate body made of a magnetic material and having a surface in which a bottomed housing chamber is formed, and a magnetic pad disposed within the housing chamber, wherein the magnetic pad has a magnetic pole having a pad surface that comes into contact with a magnetic object to be fixed, a reversible magnet whose polarity can be reversed that is arranged between the magnetic pole and the bottom of the housing chamber, and a non-reversible magnet that is arranged between the magnetic pole and the inner peripheral side surface of the housing chamber so as to surround the magnetic pole, and is characterized in that an adjustment recess for adjusting the surface area of the pad, so that the surface area of the pad surface matches the pole surface area of the non-reversible magnet.

### [FFECT OF THE INVENTION]

According to the present invention, the pad surface area is adjusted by means of the adjustment recess so as to be equal to the pole surface area of the non-reversible magnet, thereby increasing the adsorption force.

### [BRIEF DESCRIPTION OF THE DRAWINGS]

[Figure 1] FIG. 1 shows a magnetic clamp device, where FIG. 1A is a front view of the magnetic clamp device, where FIG. 1B is a cross-sectional view of one magnetic pad.
[Figure 2] FIG. 2 illustrates a magnetic pad, where FIG. 2A is a cross-sectional view, FIG. 2B shows a magnetic pole and a non-reversible magnet arranged around it, and FIG. 2C is an enlarged cross-sectional view of an adjustment recess (the area circled with a dotted line in FIG. 2A).
[Figure 3] FIG. 3 is a view for explaining environment to be evaluated, FIG. 3A is a view for explaining the evaluation equipment, and FIG. 3B is a view for explaining the range of the magnetic pads to be evaluated.
[Figure 4] FIG. 4 shows experimental results
[Figure 5] FIG. 5 illustrates another embodiment.

### [PREFERRED EMBODIMENT OF THE INVENTION]

When the cross-sectional area through which the magnetic flux passes is large, the magnetic flux density decreases, resulting in a lower adsorption force per unit area. However, considering the total area, the adsorption force exerted by the non-reversible magnet on the mold is presumed to remain unchanged. On the other hand, when the cross-sectional area through which the magnetic flux passes is small, the magnetic flux density increases, resulting in a higher adsorption force per unit area. However, magnetic flux leakage is more likely to occur, and therefore, considering the total area, the adsorption force exerted by the non-reversible magnet on the mold is presumed to decrease.

However, based on the inventors' verification, it has been found that a larger contact area between the magnetic pole and the magnetic object to be fixed (e.g., a mold) does not necessarily result in improved performance. Although it is difficult to predict all the paths through which magnetic flux will travel, the flux tends to seek and establish paths that offer lower resistance. The inventors hypothesized that allowing the magnetic flux to search for and establish such favorable paths under conditions where the magnetic flux density is maximized would result in the greatest adsorption force on the mold, and conducted verification based on this hypothesis.

The configuration according to the present invention is characterized in that the area of the magnetic pole of the non-reversible magnet is made to match the area of the magnetic pole that contacts the mold. Since reversible magnets exhibit weaker magnetic force than non-reversible magnets, it is considered that the magnetic flux of the reversible magnet scarcely passes through the surface of the magnetic pole that contacts the mold. Accordingly, the area of the magnetic pole of the non-reversible magnet is used as a reference for determining the contact area of the magnetic pole with the mold.

An embodiment of the present invention will be described below.

### [EXAMPLE 1]

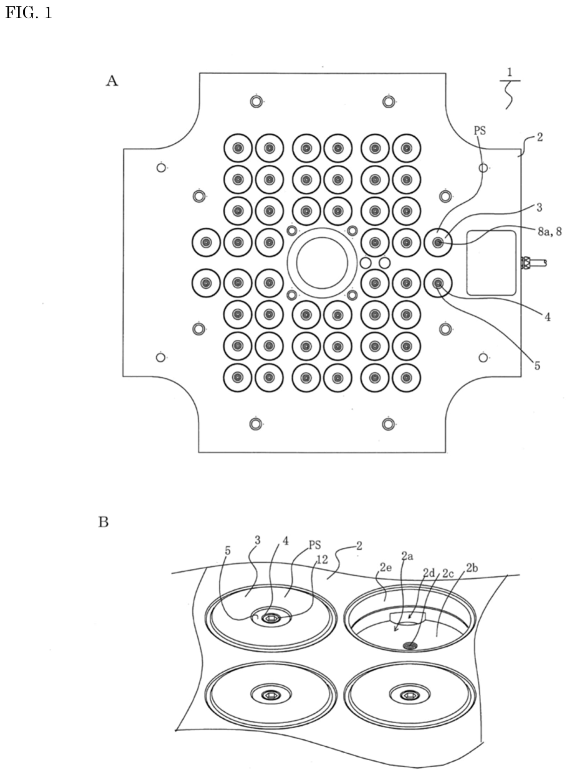

FIG. 1 is a diagram illustrating a magnetic clamp device 1. FIG. 1A is a front view of the magnetic clamp device 1, and FIG. 1B is an enlarged perspective view showing a portion of a magnetic pad 3.

In FIG. 1A, the magnetic clamp device 1 includes a plate body 2 made of a magnetic material, and a plurality of magnetic pads 3 provided on the surface of the plate body 2. In addition to the magnetic pads, the surface of the plate body 2 is also provided with through-holes for inserting components such as proximity sensors and ejector rods (not shown).

In FIG. 1B, the magnetic pad 3 is disposed within a bottomed housing chamber 2a formed in the plate body 2. In the figure, the magnetic pad 3 located at the upper right is shown in a removed state. The magnetic pad 3 has a cylindrical shape and contacts a mold (not shown) at the pad surface PS. A deep counterbore 4 is formed at the center of the pad surface PS. The head portion 12a of a bolt 12 is visible within the deep counterbore 4. The bolt 12 secures the magnetic pad 3 to a female threaded hole 2c formed in the bottom portion 2b of the housing chamber 2a. Around the deep counterbore 4, an adjustment recess 5 is provided, which is recessed below the pad surface PS. The adjustment recess 5 is provided to adjust the surface area of the pad. Due to the deep counterbore 4 and the adjustment recess 5, the head portion 12a of the bolt 12 is positioned at least 0.2 mm below the pad surface PS. A cavity 2d is also formed for wiring to the magnetic pad 3.

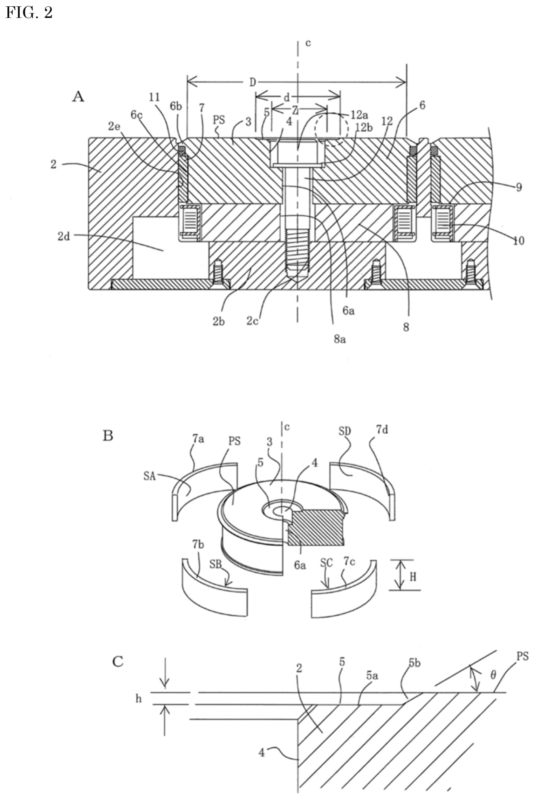

FIG. 2 is a diagram illustrating the magnetic pad 3. FIG. 2A is a cross-sectional view thereof. FIG. 2B is a view showing a magnetic pole 6 and non-reversible magnets 7 provided around the magnetic pole 6. FIG. 2C is an enlarged cross-sectional view of the adjustment recess 5, corresponding to the area enclosed by a dotted circle in FIG. 2A.

In FIG. 2A, the magnetic pad 3 includes a magnetic pole 6; a non-reversible magnet 7 (e.g., a neodymium magnet) capable of polarity reversal, which is provided so as to surround the magnetic pole 6 in a circumferential manner; a reversible magnet 8 (e.g., an Alnico magnet) capable of polarity reversal, which is disposed on the rear side of the magnetic pole 6; a bobbin 9 arranged around the reversible magnet 8; and a coil 10 wound around the bobbin 9. The magnetic pole 6 has a circular outer periphery, and one end face thereof serves as the pad surface PS.

The magnetic pole 6 is formed from a ferromagnetic material such as steel. The magnetic pole 6 and the reversible magnet 8 are each provided with through-holes 6a and 8a, respectively, along the central axis line c, and the through-holes 6a and 8a are in communication with each other. The through-holes 6a and 8a are non-threaded through-holes. At the entrance of the through-hole 6a, a deep counterbore 4 is formed to accommodate the head portion 12a of a bolt 12. The bolt 12 secures the magnetic pole 6 and the reversible magnet 8 to the bottom portion 2b of the housing chamber 2a via a sealing member 12b (seal washer).

The magnetic pole 6 is in contact with the non-reversible magnet 7 along its outer peripheral portion 6b. On the upper side of the non-reversible magnet 7, the space between the magnetic pole 6 and the plate body 2 is such that the outer peripheral portion 6b of the magnetic pole 6 extends to a position where it either contacts or is in close proximity to the inner peripheral side surface 2e of the plate body 2 with a thin thickness. On the lower side of the outer peripheral portion 6b, a sealing member 11 (O-ring) is provided to enhance watertightness.

In FIG. 2B, the non-reversible magnet 7 is magnetized in the radial direction of the magnetic pole 6, forming N and S poles. The non-reversible magnet 7 is circumferentially divided into a plurality of identical arc segments 7a to 7d, each having an arc angle of 45 degrees. By combining the arc segments 7a to 7d, a ring-shaped non-reversible magnet 7 is formed. The arc segments 7a to 7d are arranged so as to minimize any gap between the outer peripheral surface of the magnetic pole 6 and the inner peripheral side surface 2e of the housing chamber 2a. The arc segments 7a to 7d are positioned such that the magnetic pole orientations on both the inner and outer peripheral sides are aligned. When the mold is attracted, the pad surface PS presents one of the magnetic poles-either the N pole or the S pole-of the non-reversible magnet 7, specifically the magnetic pole of the arc segments 7a to 7d that is in contact with the magnetic pole 6 on the inner peripheral side.

The adjustment recess 5 is a recess having a circular outer periphery with a diameter d centered on the central axis c of the magnetic pole 6, and is similar to the outer peripheral shape of the magnetic pole 6 or the circular shape of the inner peripheral side of the non-reversible magnet 7. The adjustment recess 5 is provided around the counterbore 4, at the center of the pad surface PS. The adjustment recess 5 is not provided on the outer periphery side of the magnetic pole 6 because providing the adjustment recess 5 on the outer periphery side of the magnetic pole 6 would leave only a long path from the non-reversible magnet 7 to the mold.

In FIG. 2C, the cross section of the adjustment recess 5 has an inclined surface 5b with an inclination angle θ extending from the pad surface PS to the bottom surface 5a of the adjustment recess. By providing this inclined surface 5b, iron and oil stains can be quickly removed. The inclination angle θ is set to 30 degrees. The depth h of the adjustment recess 5 is set to 0.5 mm, which is greater than the measurement limit of 0.2 mm of a proximity sensor generally used in the magnetic clamp device 1 to detect the drop of a mold. The depth h of the adjustment recess 5 is significantly shallower than the depth of the counterbore 4.

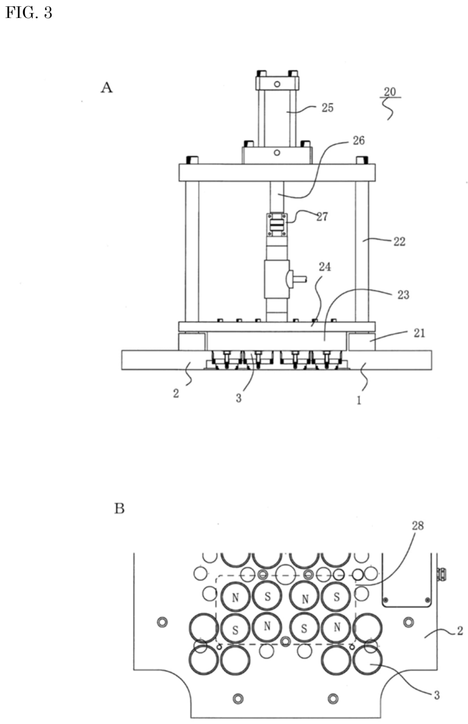

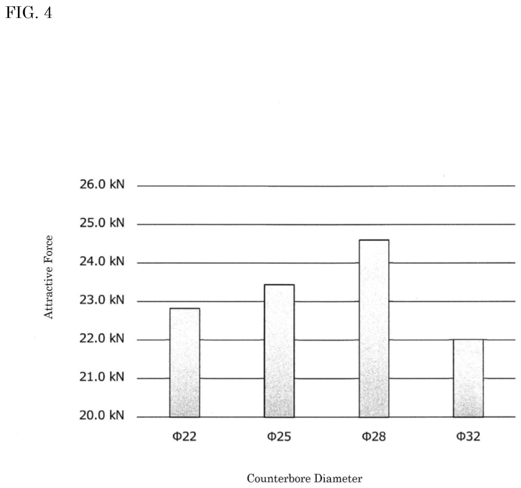

In FIGS. 3 and 4, the evaluation of the size of the adjustment recess 5 is described. FIG. 3 illustrates the evaluation environment, where FIG. 3A shows an evaluation instrument 20, and FIG. 3B shows the area of the magnetic pad 3 subject to evaluation. The evaluation results are shown in FIG. 4.

In FIG. 3A, the evaluation tool 20 includes a leg 21 that is attached to the magnetic clamp device 1, a movable part 24 that moves up and down the track of a guide rod 22 and has a pseudo mold 23 attached thereto, a driving part 25 that lifts the movable part 24, and a load sensor 27 that measures a tensile force between an output shaft 26 of the driving part 25 and the movable part 24. The evaluation tool 20 is attached to the magnetic clamp device 1, and the pseudo mold 23 is attracted by the magnetic pads 3. In FIG. 3B, the pseudo mold 23 has a size shown by a dotted line 28. In this example, a total of four bipolar poles consisting of four N-pole magnetic pads and four S-pole magnetic pads are attracted to the pseudo mold 23. The movable part 24 is lifted by the driving part 25, and the tensile force when the pseudo mold 23 is peeled off from the magnetic pads 3 is measured by the load sensor 27.

In FIG. 4, measurements of tensile force were conducted while varying the diameter d of the adjustment recess 5. As shown in FIG. 2C, the diameter d of the adjustment recess 5 varies depending on the inclination angle θ and the depth h, between the pad surface PS side and the bottom surface 5a of the adjustment recess. In this embodiment, the diameter d refers to the length measured at the pad surface PS side.

In the measurement, magnetic poles 6 with adjustment recess diameters d of 22 mm, 25 mm, 28 mm, and 32 mm were prepared. The other configurations of the magnetic poles 6 are common. The pad surface PS is a circle with diameter D, and the counterbore 4 is a circle with diameter Z, where the diameter D is 70 mm and the diameter Z is 18 mm. On the other hand, the area M of the magnetic pole of the non-reversible magnet 7 is calculated by the formula M = D × π × H, where H is the height of the arc segments 7a-7d. In this example, M is the total area of the inner peripheral surfaces (SA, SB, SC, SD) of the arc segments 7a-7d (see FIG. 2B), and is set to 3421.9 mm². Note that the bolt 12 is an M8 bolt.

The area A of the pad surface PS that contacts the mold is calculated by the formula A = (D - d) × 2π/4.

When the diameter d of the adjustment recess 5 is set to 22 mm, 25 mm, 28 mm, and 32 mm respectively, the corresponding pad surface areas A are 3657.51 mm², 3546.77 mm², 3421.89 mm², and 3233.39 mm². Relative to the magnetic pole area M of the non-reversible magnet 7, the area A corresponds to 106.69%, 103.65%, 100.00%, and 94.49%, respectively (rounded to the third decimal place, same hereafter).

As a result of the measurements, the adsorption forces of corresponding to the adjustment recess diameters d of 22 mm, 25 mm, 28 mm, and 32 mm were 22.8 KN, 23.4 KN, 24.6 KN, and 22.0 KN, respectively. It should be noted that the measurements were conducted using a bipolar configuration consisting of four N-pole magnetic pads 3 and four S-pole magnetic pads 3 to adsorb the pseudo mold 23. Therefore, the adsorption force per single bipolar pole is one-fourth of the total measured force.

Among these, the case where the diameter d of the adjustment recess 5 is 28 mm, corresponds to the magnetic pole area M of the non-reversible magnet. When the diameter d of the adjustment recess 5 is 28 mm, the area remains equal to the magnetic pole area of the non-reversible magnet 7, forming the path through which the pseudo mold 23 enters and exits. This represents the condition in which the magnetic flux density generated by the non-reversible magnet 7 is maximized. Accordingly, the adsorption force reached its peak when the diameter d of the adjustment recess matched the magnetic pole area M of the non-reversible magnet 7.

As demonstrated in this experimental example, it is desirable for the area A of the pad surface PS to be within a range of less than 106.69% and equal to or greater than 100.00% relative to the magnetic pole area M of the non-reversible magnet 7 (rounded to the third decimal place, same hereafter). Preferably, the area A should be within the range of 100.00% to 103.65%. By providing the adjustment recess 5 at the center of the magnetic pole 6 and adjusting the area of the pad surface PS that contacts the mold to be equal to the magnetic pole area M of the non-reversible magnet 7, the adsorption force can be increased.

### [EXAMPLE 2]

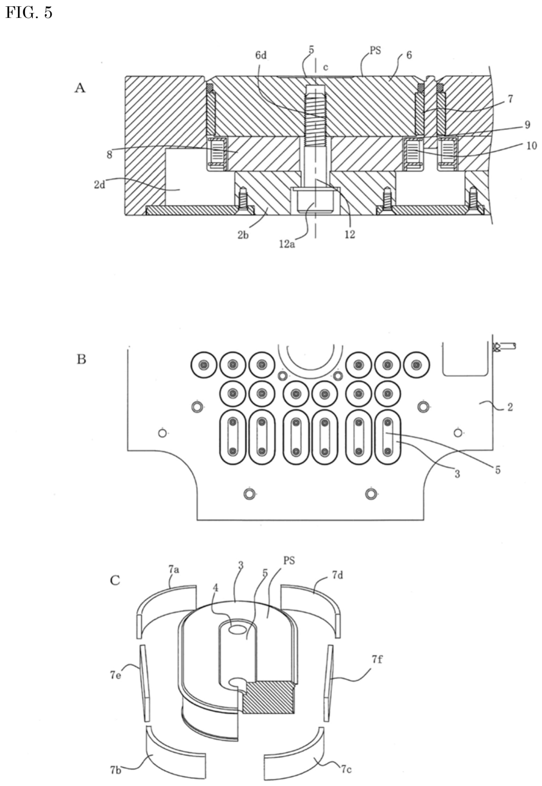

In Example 1, the through-hole 6a with the deep counterbore 4 was drilled at the center of the surface of the magnetic pole 6, and the bolt 12 passed through the center of the magnetic pad 3 to fix the magnetic pad 3 to the bottom portion 2b of the housing chamber 2a. In the present example, as shown in FIG. 5A, no deep counterbore 4 is provided at the center of the surface of the magnetic pole 6, and the bolt 12 protrudes into the housing chamber 2b by penetrating the bottom portion 2b from the rear side of the plate body 2. The magnetic pole 6 is formed with a bottomed female threaded hole 6d that opens toward the bottom portion 2b, and the bolt 12 is screwed into the female threaded hole 6d. In this example as well, the adjustment recess 5 is provided at the center of the pad surface PS, and the area of the pad surface PS that contacts the mold is adjusted to match the magnetic pole area M of the non-reversible magnet 7. The outer peripheral shape of the adjustment recess 5 is circular, similar to the magnetic pole 6 or the non-reversible magnet 7. Other components with identical reference numerals are the same as those in the previous examples.

### [EXAMPLE 3]

In the above examples, the non-reversible magnet was configured in a ring shape composed of four arc segments 7a-7d. In the present example, the outer peripheral shape of the magnetic pole 6 is a track shape. Accordingly, the non-reversible magnet 7 that surrounds the magnetic pole 6 is also formed in a track shape by combining four arc segments 7a-7d with straight segments 7e and 7f. Even in such a case, the area A of the pad surface PS in contact with the mold is adjusted to match the area of the magnetic pole of the non-reversible magnet 7. In this example, the outer peripheral shape of the adjustment recess 5 is a track shape similar to that of the magnetic pole 6 or the non-reversible magnet 7. The adjustment recess 5 is provided at the center of the pad surface PS. Even when the outer peripheral shape of the magnetic pole 6 is rectangular and the non-reversible magnet 7 is formed in a rectangular shape (including square) composed only of four straight segments, the area A of the pad surface is adjusted by the adjustment recess 5 to match the magnetic pole area M of the non-reversible magnet 7. In such cases, it is preferable that the outer peripheral shape of the adjustment recess 5 be similar to the magnetic pole 6 or the non-reversible magnet. In any case, the non-reversible magnet 7 is ring-shaped and surrounds the magnetic pole 6, and the outer peripheral shape of the adjustment recess 5 is similar to that of the non-reversible magnet. Furthermore, as in Example 2, the present invention is also applicable in cases where there is no deep counterbore 4 at the center of the surface of the magnetic pole 6, and the bolt 12 protrudes into the housing chamber 2b by penetrating the bottom portion 2b from the rear side of the plate body 2.

### DESCRIPTION OF REFERENCE NUMERAL

- 1: magnetic clam device
- 2: plate body
- 2a: housing chamber
- 2b: bottom
- 2c: female screw hole
- 2d: cavity
- 2e: side surface
- 3: magnetic pad
- 4: counterbore
- 5: adjustment recess
- 5a: bottom
- 5b: inclined surface
- 6: magnetic pole
- 6a, 8a: through hole
- 6b: outer periphery
- 6c: female screw hole
- 7: non-reversible magnet
- 7a to 7d: arc piece
- 7e, 7f: straight piece
- 8: reversible magnet
- 9: bobbin
- 10: coil
- 11: sealing material
- 12: bolt
- 12a: head
- 12b: sealing material
- 20: evaluation tool
- 21: leg
- 22: guide rod
- 23: pseudo mold
- 24: movable part
- 25: driving part
- 26: output shaft
- 27: load sensor
- 28: dotted line
- A: area
- D: diameter
- M: area
- PS: pad surface
- Z: diameter
- c: central axis
- d: diameter
- θ: inclination angle

## Claims

1. A magnetic clamp device, comprising:
a plate body made of a magnetic material, and having, on a surface thereof, a housing chamber with a bottom; and
magnetic pads disposed in the housing chamber, each magnetic pad including:
a magnetic pole having a pad surface configured to contact a magnetic workpiece to be fixed;
a reversible magnet, having a reversible polarity, disposed between the magnetic pole and the bottom of the housing chamber; and
a non-reversible magnet disposed between the magnetic pole and an inner peripheral side surface of the housing chamber so as to surround the magnetic pole;
wherein a through-hole extending through the magnetic pole is provided at a center of the pad surface for insertion of a bolt fixing the magnetic pad to the plate body, and a counterbore is formed to accommodate a head of the bolt;
wherein an adjustment recess, shallower than the counterbore, is formed around the counterbore to adjust an area of the pad surface; and
wherein an adjusted pad surface area A defined by the adjustment recess is exactly equal to 100.00% of, or less than 106.69% of, a surface area M of the non-reversible magnet that contacts the magnetic pole.

2. A magnetic clamp device, comprising:
a plate body made of a magnetic material, and having, on a surface thereof, a housing chamber with a bottom; and
magnetic pads disposed in the housing chamber, each magnetic pad including:
a magnetic pole having a pad surface configured to contact a magnetic workpiece to be fixed;
a reversible magnet, having a reversible polarity, disposed between the magnetic pole and the bottom of the housing chamber; and
a non-reversible magnet disposed between the magnetic pole and an inner peripheral side surface of the housing chamber so as to surround the magnetic pole;
wherein the magnetic pole has a bottomed female screw hole opened toward the bottom of the housing chamber;
wherein a bolt protruding from the bottom of the housing chamber is threaded into the female screw hole;
wherein a shallow adjustment recess, shallower than a counterbore, is provided at the center of the pad surface to adjust an area of the pad surface; and
wherein an adjusted pad surface area A defined by the adjustment recess is exactly 100.00% of, or less than 106.69% of, a surface area M of the non-reversible magnet that contacts the magnetic pole.

3. In the magnetic clamp device according to claim 1 or 2, the outer peripheral shape of the adjustment recess is similar to the outer peripheral shape of the magnetic pole.
